# EUROPÄISCHE PATENTSCHRIFT

(11) **EP 4 277 943 B1**
(45) Veröffentlichungstag und Bekanntmachung des Hinweises auf die Patenterteilung: **18.12.2024**
(21) Anmeldenummer: 22701201.0
(22) Anmeldetag: 14.01.2022
(51) Int. Cl.: C08G 59/38, C08G 59/40, C08G 59/68, C08L 63/00

(54) **ZUSAMMENSETZUNG**
COMPOSITION
COMPOSITION

(30) Priorität: 15.01.2021 EP 21151780
(43) Veröffentlichungstag der Anmeldung: 22.11.2023
(73) Patentinhaber: Kansai Helios Austria GmbH, 1210 Wien (AT)
(72) Erfinder: HERKER, Mario, 2352 Gumpoldskirchen (AT); SCHELLENBERG, Johann, 2500 Baden (AT); RAMETSTEINER, Karl, 4020 Linz (AT); BREITWIESER, Christian, 1020 Wien (AT); TYPPELT, Gerhard, 1210 Wien (AT)
(74) Vertreter: Schwarz & Partner Patentanwälte GmbH
(86) Internationale Anmeldenummer: PCT/EP2022/050753
(87) Internationale Veröffentlichungsnummer: WO 2022/152851

(56) Entgegenhaltungen:
- EP-A1- 3 460 019
- CN-A- 109 554 148
- JP-A- 2000 344 861
- JP-B2- 3 645 745
- US-A1- 2009 264 558
- US-A1- 2020 181 464

## Beschreibung

### TECHNISCHES GEBIET

Die vorliegende Erfindung betrifft Zusammensetzungen, die insbesondere zur Verklebung von Blechen geeignet sind.

### HINTERGRUND DER ERFINDUNG

Miteinander verklebte Metallteile, wie z.B. Blechteile, finden in unterschiedlichsten technischen Gebieten Anwendung. Vor allem beim Bau von Generatoren, Elektromotoren, Transformatoren sowie anderen elektrischen Maschinen werden Pakete von verklebten Elektroblechteilen als Ausgangsmaterial für magnetische Kerne eingesetzt. Zu verklebende Blechteile werden üblicherweise ein- oder zweiseitig mit einer speziellen Klebstoffschicht, vorzugsweise mit einem vernetzungsfähigen Schmelzkleber, einem sogenannten "Backlack", versehen. Beschichtungen aus Backlack haben den Vorteil, dass diese nach Aufbringung auf die Oberfläche eines Metalls, insbesondere eines Blechs (z.B. eines Blechbandes), keine adhäsive Wirkung entfalten. Erst im Zuge eines Verklebeprozesses wird die Klebstoffschicht durch Zuführung von thermischer Energie, beispielsweise, aktiviert. Durch diese Aktivierung wird die Beschichtung adhäsiv, so dass aneinander liegende Metalle verklebt werden können. Gleichzeitig wird die Klebeschicht gehärtet und zu einem wärmebeständigen Duroplast.

Die Herstellung von mit Backlack verklebten Blechteilen bzw. Blechlamellen hat u.a. folgende Vorteile:
a) Beibehaltung der magnetischen Eigenschaften durch Erhaltung der Mikrostruktur im Stahlgefüge durch Anwendung moderater Fügetemperaturen und Drücke;
b) kompakte Lamellenpakete mit engen Fertigungstoleranzen verbessern die Abfuhr produzierter Abwärme im Betrieb. Kühlanordnungen können so minimiert werden;
c) die viskoelastischen Verbindungsschichten zwischen den einzelnen Lamellen zeigen ein ausgeprägtes Dämpfungsverhalten gegenüber Schallübertragung;
d) dünne, stabile Klebeschichten, ohne Kleberaustritt an den Außenkanten, ermöglichen hohe Designfreiheit unter Nutzung engster Toleranzen;
e) Vermeidung von Korrosionsproblemen (interlamellare Korrosion) durch eine hochstabile, wärmebeständige, hydrolyseresistente Vollflächenverbindung; und
f) gute Isolationswirkung gegenüber elektrischen Kurzschlüssen, wodurch der Wirkungsgrad von Transformatoren, beispielsweise, erhöht werden kann.

Vernetzungsfähige Schmelzkleber sind im Stand der Technik hinreichend beschrieben. Beispielsweise wird in der WO 2006/049935 eine Klebstoffzusammensetzung offenbart, die ein Epoxidharz, pyrogene Siliziumdioxidpartikel und eine Auswahl von Härtungsmitteln, wie Phenolharze, Carboxylsäuren, Anhydride, Isocyanate und vor allem Dicyandiamid, welcher in allen Anwendungsbeispielen als alleiniger Härter eingesetzt wird, umfasst. Diese selbstklebende Beschichtung wird auf Elektroblechen aufgebracht und bei einer Temperatur zwischen 230°C und 260°C getrocknet. Lamellen, welche aus dem beschichteten Elektroblech ausgestanzt werden, werden aufeinandergelegt und über einen Zeitraum von 60 bis 120 Minuten bei einer Temperatur zwischen 100°C und 300°C und erhöhten Druck verklebt.

Klebstoffzusammensetzungen, wie in der WO 2006/049935 beschrieben, die im Wesentlichen Bisphenol-A- oder Bisphenol-F-Epoxidharze und Gemische davon (jedoch ohne jede Angabe hinsichtlich Äquivalentgewichten, Funktionalitäten und dgl.), pyrogenes Siliziumdioxid als Füll- und Verstärkungsmittel und einen Härter wie z.B. eine Lewissäure umfassen, sind in der Handhabung problematisch, da insbesondere Lewissäuren großteils sehr gesundheitsschädlich und giftig sind. EP3460019A1 offenbart einkomponentige hitzehärtende Epoxidharzklebstoffe sowie deren Verwendung insbesondere im Fahrzeugbau und Sandwichpanelbau.

In der WO 2017/050892 werden ebenfalls thermisch aktivierbare Klebstoffzusammensetzungen beschrieben, welche ein Epoxidharz, einen aktivierbaren Härter und einen aktivierbaren Beschleuniger umfassen. Diese Klebstoffzusammensetzungen werden bei einer Temperatur von über 100°C auf der Oberfläche von Blechen ausgehärtet. Anschließend werden Blechlamellen ausgestanzt, übereinander gelagert und durch Aktivierung des an den Oberflächen befindlichen Klebstoffs bei einer Temperatur von ca. 200°C miteinander verklebt. Die Aktivierungszeit solcher Klebstoffe liegt bei 0,5 bis 1 Sekunde und die Aushärtungszeit bei maximal 5 Sekunden.

Die rasche Aushärtung der Klebeschicht, nämlich die katalytisch beschleunigte Reaktion von Dicyandiamid, als Härter, mit Epoxidharz, wird in der WO 2017/050892 durch Zusatz von spezifischen Beschleunigern erreicht, insbesondere durch die Zugabe von meist gesundheitsschädlichen und giftigen Lewissäuren, wobei es durch unspezifische und schnell verlaufende chemische Reaktionen zu sehr hohen Vernetzungsdichten kommt, die zu Sprödigkeit und verminderter Haltbarkeit der Klebeschicht führt. Zudem besteht die Gefahr einer vorschnellen Teilvernetzung im flüssigen Anlieferungszustand, was sich in einer starken Viskositätssteigerung und geringen Lagerfähigkeit bemerkbar macht.

In der WO 2020/233840 wird insbesondere gelehrt, dass eine Temperierung der ausgestanzten und somit bereits beschichteten Lamellen notwendig ist, um elektrische Verluste im fertigen Produkt (einer Maschine umfassend verklebte Lamellenpakete) zu minimieren. Durch einen solchen zusätzlichen energieintensiven Verfahrensschritt, werden Verfahren zur Herstellung von Blechpaketen ineffizient.

Allen drei hier diskutierten Veröffentlichungen ist gemeinsam, dass die Härtung von, im Wesentlichen Dicyandiamid mit Epoxidharz, durch sogenannte katalytische Beschleuniger verkürzt werden soll. Die damit einhergehenden Probleme wie exakte Temperatursteuerung, überkurze und in der Produktion kaum beherrschbare Vernetzungszeiten, Übervernetzung und der damit einhergehenden Versprödung und die Giftigkeit von Beschleunigern in Kauf genommen wird.

Es ist Aufgabe der vorliegenden Erfindung eine mit Wasser verdünnbare Zusammensetzung bereitzustellen, die es ermöglicht Metallteile wie Bleche, in kürzester Zeit miteinander zu verkleben. Durch die zeitliche Reduktion des Klebevorgangs ist es möglich Kosten signifikant einzusparen. Zudem soll die Zusammensetzung nicht die Nachteile des Standes der Technik, insbesondere der WO 2006/049935,
WO 2017/050892 und der WO 2020/233840, aufweisen.

Eine weitere Aufgabe der vorliegenden Erfindung ist es eine Zusammensetzung bereitzustellen, die über einen Zeitraum von mindestens sechs Monaten lagerstabil ist. Auch die Metalle, die mit einer derartigen Zusammensetzung beschichtet sind, sollen auch nach einer Lagerung von mehr als sechs Monaten uneingeschränkt verklebbar sein.

### ZUSAMMENFASSUNG DER ERFINDUNG

Die vorliegende Erfindung betrifft eine Zusammensetzung, vorzugsweise zur Verklebung von Metallblechen, umfassend:
a. 1 Molteil mindestens eines linearen Epoxidharzes mit einem mittleren Epoxid-Äquivalentgewicht von 600 bis 5.000 g/mol und einer Epoxidfunktionalität von 2,
b. 0,4 bis 0,8 Molteile mindestens eines nicht-linearen Epoxidharzes mit einem mittleren Epoxid-Äquivalentgewicht von 180 bis 350 g/mol und einer mittleren Epoxidfunktionalität von mindestens 3.
c. 0,8 bis 1,3 Molteile mindestens eines basischen Härters umfassend mindestens zwei freie amingebundene Wasserstoffatome, und
d. 0,9 bis 1,2 Molteile mindestens eines (Vor-)Vernetzers umfassend mindestens zwei blockierte Isocyanat-gruppen.

Die erfindungsgemäße Zusammensetzung kann als Einkomponentenmaterial zur Beschichtung und anschließender Verklebung von Metallen, insbesondere von Blechen, Blechteilen bzw. Blechlamellen verwendet werden. Es hat sich überraschender Weise herausgestellt, dass die erfindungsgemäße Zusammensetzung eine hohe Lagerstabilität, vorzugsweise bei Raumtemperatur, aufweist, so dass die Zusammensetzung auch nach mehreren Monaten, d.h. mindestens sechs, vorzugsweise mindestens acht, noch mehr bevorzugt mindestens zwölf, Monaten ohne Qualitätsverluste zur Beschichtung und anschließender Verklebung von Metallen, insbesondere Blechen eingesetzt werden kann.

Wird ein Metall, insbesondere ein Blech bzw. Blechteil, mit der erfindungsgemäßen Zusammensetzung beschichtet, kann dieses auch nach einem Zeitraum von mindestens sechs Monaten mit einem zweiten optional beschichteten Metall verklebt werden. Dadurch ist es möglich beschichtete Metalle über einen längeren Zeitraum zu lagern und bei Bedarf zu verarbeiten und zu verkleben.

Die erfindungsgemäße Zusammensetzung hat den Vorteil, dass diese auf der Oberfläche eines Metalls rasch und unter Verwendung geringerer Temperaturen als vergleichbare Zusammensetzung aus dem Stand der Technik getrocknet und gleichzeitig vorvernetzt werden können (in unter zwei Minuten). Dadurch können Beschichtungsprozesse optimiert und verkürzt werden. Insbesondere die Beschichtung von Blechen, welche üblicherweise gerollt gelagert werden, wird dadurch signifikant vereinfacht und optimiert, da die Bleche in kürzester Zeit nach deren Beschichtung, in der Regel unmittelbar nach dem Walz- und Beschichtungsvorgang, wieder aufgerollt werden können.

Ein weiterer Vorteil der vorliegenden Erfindung liegt darin, dass eine zusätzliche Temperierung der beschichteten, gestanzten und optional geschichteten Bleche, vor der endgültigen Verklebung und Aushärtung, nicht mehr nötig ist, obwohl dies, dem Stand der Technik entsprechend (siehe z.B. WO 2020/233840), oftmals Praxis ist, da die Aushärtungsparameter so präzise eingestellt werden können, dass breite Anwendungsfenster (Zeit und Temperaturgradienten) entfallen. Dies führt zu einer zusätzlichen Energieeinsparung und Effizienzsteigerung bei der Anwendung der erfindungsgemäßen Zusammensetzung.

Auch die "Aktivierung und Endhärtung" der vorvernetzten Beschichtung auf dem Metall und die anschließende Verklebung mit einem weiteren Metall kann im Vergleich mit anderen Zusammensetzungen aus dem Stand der Technik in kürzerer Zeit erfolgen (in weniger als zwei Minuten).

Die erfindungsgemäße Zusammensetzung ist besonders vorteilhaft, da beispielsweise auf gesundheitsschädliche Lewissäuren - wie in der Literatur vorgeschlagen - zur Vernetzung der Komponenten verzichtet werden kann. Zudem kann die erfindungsgemäße Zusammensetzung im Wesentlichen auf Wasserbasis bereitgestellt werden, wodurch auf die Verwendung von organischen Lösungsmitteln weitgehend verzichtet werden kann. Die Verwendung von Wasser als Basis der Zusammensetzungen hat einerseits sicherheitstechnische Vorteile andererseits auch gesundheitliche, da beispielsweise Dämpfe/Abgase aus organischen Lösungsmitteln verhindert und/oder minimiert werden können.

Durch das Vorsehen eines basischen Härters und eines Vernetzers in der erfindungsgemäßen Zusammensetzung ist es möglich, sowohl die (Vor-)Vernetzung, als auch die Endhärtung der Harze und deren Bindung an eine metallische Oberfläche vorteilhafter zu steuern als bisher im Stand der Technik beschriebene Klebstoffzusammensetzungen.

Die Vernetzung der Harze mit der erfindungsgemäßen Zusammensetzung erfolgt somit in zwei chemisch unterschiedlichen und gut steuerbaren Teilschritten.

In einem ersten Teilschritt kommt es zu einer Vorvernetzung der auf eine metallische Oberfläche applizierten Zusammensetzung bei den an die Produktion angepassten Temperaturen und Zeiträumen durch eine Reaktion von sekundären Hydroxylgruppen aus den linearen, difunktionellen (Epoxidfunktionalität von 2) und vorzugsweise langkettigen Epoxidharzen mit multifunktionellen, vorzugsweise di- oder trifunktionellen, Isocyanaten zu einer weitmaschigen, elastischen Polyurethanmatrix. In diesem ersten Schritt bleiben die Epoxidgruppen vorerst erhalten. Die in der erfindungsgemäßen Zusammensetzung vorhandenen Isocyanate liegen in der Anlieferungsform in amingeblockter Form vor und werden erst durch moderaten Temperatureinfluss entblockt und zur Polyaddition befähigt. Die dabei gleichzeitig entstehenden Amine entweichen überraschend nicht in die Umgebung, sondern werden an die Oxirangruppen der Epoxidharze zu tertiären Aminen addiert. Diese beschleunigen ihrerseits die Polyurethanbildung (Addition der Isocyanate an die Hydroxylgruppen), sodass dieser erste Teilschritt der Vernetzung sehr rasch und vollständig erfolgt, wobei die erhaltene Klebstoffschicht noch thermoplastisch erhalten bleibt und somit für einen zweiten Teilschritt als Heissschmelzkleber bestens geeignet ist.

Durch die Auswahl der Isocyanate, deren Spacerlänge, der Blockierungsamine sowie der optimalen Vernetzungsparameter können die gewünschten Eigenschaften vom Fachmann reproduzierbar eingestellt werden. Es hat sich überraschender Weise auch gezeigt, dass 0,2 bis 1,0, vorzugsweise 0,3 bis 0,8, noch mehr bevorzugt 0,3 bis 0,6, NCO-Äquivalente (d.h. Isocyanat-Äquivalente), pro OH-Äquivalent eine besonders-geeignete Vorvernetzung ergeben.

Um in einem zweiten Teilschritt zu einer duroplastischen und somit wärmebeständigen Vollvernetzung zu gelangen, bedarf es einer weiteren Additionsreaktion mindestens eines basischen Härters mit zumindest zwei amingebundenen Wasserstoffatomen pro Molekül und ausreichend vorhandener thermisch reaktiven Epoxidgruppierungen in der Zusammensetzung. Es hat sich gezeigt, dass durch Aminhärter auf Basis von Guanidinen, beispielsweise, und der Verwendung von vorzugsweise hydroxylgruppenfreien, mindestens trifunktionellen nicht-linearen Epoxidharzen, wie Novolak-Epoxidharzen, (d.h. Epoxidharze mit einer mittleren Epoxidfunktionalität von mindestens 3) erreicht werden kann.

Die mittlere Funktionalität des Epoxidharzgemisches (d.h. die Anzahl der Epoxidgruppen pro Harzmolekül) beträgt in der erfindungsgemäßen Zusammensetzung vorzugsweise 2,3 bis 5,0, noch mehr bevorzugt 2,4 bis 3,5. Bei einer derartigen Funktionalität können die besten Ergebnisse hinsichtlich Wärmebeständigkeit, Haftung und Schälfestigkeit, erzielt werden.

Es hat sich zudem gezeigt, dass das Verhältnis Oxiran- zu NH-Gruppen in der erfindungsgemäßen Zusammensetzung vorzugsweise im Bereich von 0,8 bis 1,3, noch mehr bevorzugt 0,9 bis 1,1, liegen sollte.

Zusammenfassend, reagieren somit NCO- und Oxirangruppierungen, allerdings in der abgestuften Reihenfolge der obigen Vernetzungsschritte, jeweils durch Additionsreaktionen mit OH- und NH- Gruppen zu einem duroplastischen, ausreichend elastischen Werkstoff zur Verbindung von Elektroblechen.

Ein weiterer Aspekt der vorliegenden Erfindung betrifft ein beschichtetes Metall, vorzugsweise beschichtetes Blech, herstellbar durch Aufbringen einer erfindungsgemäßen Zusammensetzung auf einen festen Körper, vorzugsweise auf ein Blech.

Ein noch weiterer Aspekt der vorliegenden Erfindung betrifft ein Verfahren zur Beschichtung und zur optionalen Verklebung von Blechen umfassend die Schritte
- Aufbringen einer erfindungsgemäßen Zusammensetzung auf die Oberfläche eines Blechs,
- Trocknen und gleichzeitiges Vorvernetzen der Zusammensetzung auf der Oberfläche des Blechs bei einer Temperatur von 150 bis 200°C, vorzugsweise 170-190°C, während einer Dauer von 10 Sekunden bis 2 Minuten, vorzugsweise von 20 bis 30 Sekunden,
- optionales Ausstanzen von Blechstücken aus dem Blech,
- optionales Stapeln der ausgestanzten Blechteile und
- optionales Verkleben und Härten der ausgestanzten Blechteile bei einer Temperatur von 220 bis 260°C, während einer Dauer von 5 Sekunden bis 2 Minuten, vorzugsweise von 10 bis 30 Sekunden.

Ein weiterer Aspekt der vorliegenden Erfindung betrifft ein Blechpaket oder Bauteil umfassend ein Blechpaket, insbesondere ein Bauteil für Elektromaschinen und/oder Transformatoren, wobei das Blechpaket mindestens zwei mit einer erfindungsgemäßen Zusammensetzung miteinander verklebte Bleche umfasst.

### BESCHREIBUNG DER AUSFÜHRUNGSFORMEN

Die erfindungsgemäße Zusammensetzung wird durch Vermischen von
a. 1 Molteil mindestens eines linearen Epoxidharzes mit einem mittleren Epoxid-Äquivalentgewicht von 600 bis 5.000 g/mol und einer Epoxidfunktionalität von 2,
b. 0,4 bis 0,8 Molteile mindestens eines nicht-linearen Epoxidharzes mit einem mittleren Epoxid-Äquivalentgewicht von 180 bis 350 g/mol und einer mittleren Epoxidfunktionalität von mindestens 3,
c. 0,8 bis 1,3 Molteile mindestens eines basischen Härters umfassend mindestens zwei freie amingebundene Wasserstoffatome, und
d. 0,9 bis 1,2 Molteile mindestens eines Vernetzers umfassend mindestens zwei blockierte Isocyanatgruppen hergestellt.

"Molteil", wie hier verwendet, gibt das molare Verhältnis, der in der Zusammensetzung befindlichen Komponenten zueinander wieder. Beispielsweise umfasst die erfindungsgemäße Zusammensetzung pro Molteil des mindestens einen linearen Epoxidharzes 0,4 bis 0,8 Molteile des mindestens einen nicht-linearen Epoxidharzes.

Gemäß einer bevorzugten Ausführungsform der vorliegenden Erfindung umfasst die Zusammensetzung Wasser und/oder ein organisches Lösungsmittel und liegt als Lösung, Emulsion oder Dispersion vor.

Die erfindungsgemäße Zusammensetzung kann bevorzugt Wasser und/oder ein organisches Lösungsmittel umfassen, welche beispielsweise von den Ausgangskomponenten, die in Wasser oder einem organischen Lösungsmittel gelöst oder suspendiert sind, stammen. Zudem kann Wasser und/oder ein organisches Lösungsmittel zur Einstellung der Viskosität der erfindungsgemäßen Zusammensetzung hinzugegeben werden.

Gemäß einer weiteren bevorzugten Ausführungsform der vorliegenden Erfindung weist das mindestens eine lineare Epoxidharz ein mittleres Epoxid-Äquivalentgewicht von 1.500 bis 2.500 g/mol auf.

Es hat sich gezeigt, dass lineare Epoxidharze auf Basis von Bisphenolen, sogenannte Bisphenol-(Di)-Glycidylether, besonders vorteilhafte Eigenschaften aufweisen. Demgemäß ist das mindestens eine lineare Epoxidharz vorzugsweise ein Bisphenol-Epoxidharz, vorzugsweise ein Bisphenol-A-Epoxidharz, ein Bisphenol-F-Epoxidharz, ein Bisphenol-S-Epoxidharz oder ein Bisphenol-Z-Epoxidharz, wobei Harze auf Basis von Bisphenol A besonders bevorzugt sind.

Gemäß einer bevorzugten Ausführungsform der vorliegenden Erfindung umfasst das mindestens eine lineare Epoxidharz mindestens drei Bisphenol Einheiten pro Molekül.

Gemäß einer weiteren bevorzugten Ausführungsform der vorliegenden Erfindung ist das mindestens eine lineare Epoxidharz ein Bisphenol-A-Epoxidharz mit 3 bis 15, vorzugsweise 4, 7 oder 9, Bisphenol A Einheiten pro Molekül.

Die freien Hydroxylgruppen im linearen Epoxidharz sind für die (Vor-)Vernetzung der Harze essenziell. Aus diesem Grund umfasst das mindestens eine lineare Epoxidharz vorzugsweise Hydroxylgruppen, wobei ein lineares Epoxidharzmolekül mindestens eine, vorzugsweise mindestens zwei, Hydroxylgruppen aufweist.

Gemäß einer noch weiteren bevorzugten Ausführungsform der vorliegenden Erfindung umfasst das mindestens eine lineare Epoxidharz zwei bis 14, vorzugsweise drei, sechs oder acht sekundäre Hydroxylgruppen pro Molekül.

Gemäß einer bevorzugten Ausführungsform der vorliegenden Erfindung umfasst das mindestens eine lineare Epoxidharz ein Bisphenol-A-Epoxidharz mit 2 bis 14, vorzugsweise 3, 6 oder 8 Hydroxylgruppen pro Molekül.

Gemäß einer besonders bevorzugten Ausführungsform der vorliegenden Erfindung weist das mindestens eine nicht-linearen Epoxidharz ein mittleres Epoxid-Äquivalentgewicht von 190 bis 280 g/mol auf.

Vorzugsweise ist das mindestens eine nicht-lineare Epoxidharz mindestens ein Novolak-Epoxidharz.

Novolake sind Phenolharze mit einem Formaldehyd-Phenol-Verhältnis kleiner als 1:1, die durch saure Kondensation der Edukte erhalten werden. Novolake eignen sich besonders gut in der Zusammensetzung der vorliegenden Erfindung da diese kleine Oxiran-Äquivalalentgewichte und eine hohe Funktionalität aufweisen und damit zur gesteuerten Härtung besonders geeignet sind. Durch die Abwesenheit von Hydroxylgruppen, greifen sie erst im abschließendem abschließenden Härtungsvorgang (d.h. bei der Verklebung) in die Verarbeitungskaskade ein.

Gemäß einer bevorzugten Ausführungsform der vorliegenden Erfindung umfasst das mindestens eine Novolak-Epoxidharz Phenol- und/oder Kresol-Einheiten, wobei das mindestens eine Novolak-Epoxidharz drei bis acht, vorzugsweise drei bis sechs, Epoxidgruppen pro Molekül des Epoxidharzes, umfasst.

Gemäß einer noch weiteren bevorzugten Ausführungsform der vorliegenden Erfindung umfasst das Gemisch aus dem mindestens einen linearen Epoxidharz und dem mindestens einen nicht-linearen Epoxidharz gemeinsam im Mittel 2,3 bis 5,0 , vorzugsweise 2,4 bis 3,5, Epoxidgruppen pro Molekül des Epoxidharzes.

Gemäß einer bevorzugten Ausführungsform der vorliegenden Erfindung ist der mindestens eine basische Härter umfassend mindestens zwei freie amingebundene Wasserstoffatome ein Guanidinderivat, vorzugsweise ausgewählt aus der Gruppe bestehend aus Dicyandiamid, Dicyandiamidin, Aminoguanidin, Kreatin, Kreatinin, Arginin, aliphatisches Biguanid, aromatisches Biguanid, 2-Aminopyridimin, 3-Amino-1,2,4-Triazol, 5-Amino-1H-Tetrazol, 1,3-Di-o-tolylguanidin und 2-Cyanimino-1H,5-alkyl-1,3,5-Triazin.

Wie zuvor angeführt liegt das Verhältnis Oxiran- zu NH-Gruppen in der erfindungsgemäßen Zusammensetzung vorzugsweise im Bereich von 0,8 bis 1,3, noch mehr bevorzugt 0,9 bis 1,1. Falls einzelne der hier angeführten Guanidinderivate, mehr als zwei freie amingebundene Wasserstoffatome aufweisen, die in der Regel unterschiedlich reaktiv sind, wird in den erfindungsrelevanten Berechnungen und Korrelationen, jeweils nur der Mindestwert zwei berücksichtigt.

Um zusätzliche Querverbindungen in der vorvernetzten Polyurethanmatrix, im Zuge der Endhärtung zu ermöglichen, wird der erfindungsgemäßen Zusammensetzung ein basischer Härter beigefügt, welcher freie Aminogruppen enthält. Der basische Härter ist somit dafür verantwortlich, dass die erfindungsgemäße Zusammensetzung im Zuge der Verklebung, zu einem hochfesten, thermostabilen Duromer aushärtet.

Gemäß einer weiteren bevorzugten Ausführungsform der vorliegenden Erfindung sind der mindestens eine (Vor-)Vernetzer ein aliphatisches oder cycloaliphatisches Diisocyanat oder Triisocyanat, wobei die Isocyanat-Gruppen des aliphatischen oder cycloaliphatischen Diisocyanats oder Triisocyanats durch einen C₄- bis C₁₀-Alkyl-Rest, als Spacer getrennt sind.

Gemäß einer bevorzugten Ausführungsform der vorliegenden Erfindung ist der mindestens eine Vernetzer umfassend mindestens zwei Isocyanatgruppen ein Diisocyanat, vorzugsweise ausgewählt aus der Gruppe bestehend aus Hexamethylen-Diisocyanat, 2-Methyl-hexamethylen-Diisocyanat, 2,2,4(2,4,4)-Trimethyl-hexamethylen-Diisocyanat (TMDI), 1,12-Dodecan-Diisocyanat, omega,omega-Diisocyanatodipropylether, 1,4-Cyclohexandiisocyanat, 1,4-Diisocyanatomethylcyclohexan, Isophorondiisocyanat, und/oder deren Isocyanurat-Trimeren.

Gemäß einer besonders bevorzugten Ausführungsform der vorliegenden Erfindung ist der mindestens eine Vernetzer umfassend mindestens zwei Isocyanatgruppen Hexamethylendiisocyanat, Isophorondiisocyanat und/oder deren Isocyanurat-Trimere.

Gemäß einer weiteren bevorzugten Ausführungsform der vorliegenden Erfindung sind die Isocyanatgruppen mit einem Amin, vorzugsweise mit einem heterocyclischen Amin umfassend mindestens zwei Stickstoffheteroatome, blockiert.

Der in der erfindungsgemäßen Zusammensetzung hinzugefügte (Vor-)Vernetzer ist blockiert, um eine wasserbasierte Formulierung und damit einhergehend lange Lagerfähigkeit der Zusammensetzung zu ermöglichen, da freie Isocyanate aufgrund ihrer Reaktionsfähigkeit nur in wasserfreien Systemen existieren können. In einer wasserbasierten Zusammensetzung würden freie Isocyanate zu einer, zu diesem Zeitpunkt unerwünschten Reaktion (Vorvernetzung) mit den Hydroxylgruppen der linearen Epoxidharze, also bereits in der Anlieferungsform, führen. Ein Ausweg wäre somit eine wenig praktikable 2-Komponentenlösung mit zusätzlich kurzen Topfzeiten nach der Vermischung. Die Endergebnisse wären wohl mit den erfindungsgemäßen vergleichbar, Sinn vorliegender Erfindung ist jedoch die Bereitstellung einer lagerfähigen, 1-Komponentenformulierung auf wässriger Basis. Im Zuge der Beschichtung, in dem das Metall mit der Beschichtung erwärmt wird, werden die Blockierungsgruppen entfernt, um eine Quervernetzung der linearen Epoxidharze zu einer noch thermoplastischen Matrix zu ermöglichen.

Gemäß einer bevorzugten Ausführungsform der vorliegenden Erfindung ist das Amin ein Pyrazol, ein Imidazol, ein Benzimidazol, ein 1,2,3-Triazol, vorzugsweise ein Benztriazol, ein 1,2,4-Triazol, ein Triazabicyclodecen oder ein N-monosubstituiertes Piperazin.

Gemäß einer weiteren bevorzugten Ausführungsform der vorliegenden Erfindung ist das Amin ein Pyrazol, vorzugsweise 3,4-Dimethylpyrazol oder 3,5-Dimethylpyrazol.

Gemäß einer bevorzugten Ausführungsform der vorliegenden Erfindung ist das mindestens eine organische Lösungsmittel ein mit Wasser mischbares Lösungsmittel und ausgewählt aus der Gruppe bestehend aus einem C₃-C₆-Keton, einem C₂-C₄ Alkohol, einem Monoalkyl-(C₂-C₄)-Ether von C₁-C₄ Glykolen, einem Di- und/oder Triethylen und/oder -propylen-Glykol, Dioxan, Tetrahydrofuran und C₄-bis C₈-Lacton.

Ein weiterer Aspekt der vorliegenden Erfindung betrifft ein beschichtetes Metall herstellbar durch Aufbringen einer erfindungsgemäßen Zusammensetzung auf einen festen Körper, vorzugsweise auf ein Blech.

Die erfindungsgemäße Zusammensetzung kann mit bekannten Verfahren (z.B. mittels Tauchen, Sprühen, Walzen, Rakeln oder Streichen) auf eine metallische Oberfläche aufgebracht werden. Nach dem Aufbringen der Zusammensetzung wird die Beschichtung durch Erwärmen vorvernetzt. Anschließend kann das Metall für die weitere Verarbeitung gelagert und/oder transportiert werden.

Ein noch weiterer Aspekt der vorliegenden Erfindung betrifft ein Verfahren zur Beschichtung und optionalen Verklebung von Blechen umfassend die Schritte
- Aufbringen einer erfindungsgemäßen Zusammensetzung auf die Oberfläche eines Blechs,
- Trocknen der Zusammensetzung auf der Oberfläche des Blechs und gleichzeitige Vorvernetzung bei einer Temperatur von 150 bis 200°C, vorzugsweise von 170 bis 190°C, während einer Dauer von 10 Sekunden bis 2 Minuten, vorzugsweise von 20 bis 30 Sekunden,
- optionales Ausstanzen von Blechstücken aus dem Blech,
- optionales Stapeln der ausgestanzten Blechteile und
- optionales Verkleben der ausgestanzten Blechteile bei einer Temperatur von 220 bis 260°C, während einer Dauer von 5 Sekunden bis 2 Minuten, vorzugsweise von 10 bis 30 Sekunden.

Es hat sich überraschender Weise gezeigt, dass die erfindungsgemäße Zusammensetzung in besonders kurzer, jedoch technisch beherrschbarer und einstellbarer Zeit gehärtet und verklebt werden kann. Zudem sind die dabei eingesetzten Temperaturen geringer als mit Zusammensetzungen, die aus dem Stand der Technik bekannt sind. Dadurch ist es möglich industrielle Prozesse kostengünstiger zu gestalten und zu beschleunigen.

Ein weiterer Aspekt der vorliegenden Erfindung betrifft ein Blechpaket oder Bauteil umfassend ein Blechpaket, insbesondere ein Bauteil für Elektromaschinen und/oder Transformatoren, wobei das Blechpaket mindestens zwei mit einer erfindungsgemäßen Zusammensetzung miteinander verklebte Bleche umfasst.

Mit dem erfindungsgemäßen Verfahren bzw. mit der erfindungsgemäßen Zusammensetzung können Blechpakete in einfacher und rascher Weise hergestellt werden. Blechpakete finden in unterschiedlichsten Bereichen Anwendung, wobei die Verwendung in Generatoren, Transformatoren und Elektromotoren die wichtigsten Einsatzgebiete darstellen.

Ein weiterer Aspekt der vorliegenden Erfindung betrifft ein Blechpaket oder Bauteil umfassend ein Blechpaket, insbesondere ein Bauteil für Elektromaschinen und/oder Transformatoren erhältlich mit einem erfindungsgemäßen Verfahren.

### BEISPIELE

### Beispiel 1: Zusammensetzung I auf Wasserbasis

Es wurden folgende Komponenten mit Wasser zu einer Dispersion mit einem Gesamtfestkörpergehalt von 53% vermischt:
- 1 Mol eines linearen Epoxidharzes (Basis Bisphenol A) mit einer Epoxidfunktionalität von 2 und einem durchschnittlichen Epoxid-Äquivalentgewicht von 1750 g/mol vorliegend als 53%ige Dispersion in Wasser/Methoxypropanol (3:1),
- 0,8 Mol eines nichtlinearen Epoxidharzes (Basis Phenol-Novolak) mit einer Epoxidfunktionalität von 3,6 und einem durchschnittlichen Äquivalentgewicht von 194 g/mol vorliegend als 58%ige Dispersion in Wasser,
- 1,1 Mol Dicyandiamid (DCDA) berechnet mit Funktionalität von 2 und einem Äquivalentgewicht von 42 g/mol vorliegend als 30%ige Lösung in Methoxypropanol, und
- 1,12 Mol eines mit 3,5-Dimethylpyrazol (DMP) geblockten Hexamethylendiisocyanats (HMDI) mit der Funktionalität von 2, vorliegend als 38%ige Lösung in Wasser.

Die Dispersion wurde nach Vermischen für 15 min auf 60°C erwärmt und anschließend auf Raumtemperatur gekühlt. Die Viskosität der Dispersion betrug 60 bis 80 s (Auslaufzeit nach DIN EN ISO 2431:2011).

Zusammensetzung I zeigte die folgenden erfindungsgemäßen Parameter:

| | |
|---|---|
| ∑ Equiv.-OH: | 6 |
| ∑ Equiv.-NH: | 4,45 |
| ∑ Equiv.-NCO: | 2,25 |
| ∑ Equiv.-Oxiran: | 4,9 |
| ∑ OH+NH: | 10,45 |
| ∑ NCO+Oxiran: | 7,15 |

Zusammensetzung I wies einen mittlere Epoxidfunktionalität des linearen und des nichtlinearen Epoxidharzes von 2,71 auf. Die Verhältnisse von NCO- zu OH-Gruppen betrug 0,37, die Verhältnisse von Oxiran- zu NH-Gruppen 1,10 und die Verhältnisse von NCO- und Oxiran-Gruppen zu OH- und NH-Gruppen 0,68.

Zusammensetzung I konnte bei Raumtemperatur für mehr als 6 Monate ohne Beeinträchtigung der vorteilhaften Eigenschaften gelagert werden. In diesem Zeitraum kam es zu keiner erkennbaren Separation der Komponenten.

Es zeigte sich, dass Zusammensetzung I nach dem Auftragen auf ein Blech bei 195°C in 20 Sekunden getrocknet und vorvernetzt werden kann. Zwei Bleche, von denen eines mit Zusammensetzung I beschichtet wurde, konnten bei 210°C in 15 Sekunden miteinander verklebt werden.

Um auszuschließen, dass es sich nicht um reine Katalyse eines Amins (DMP) als Reaktionsbeschleuniger DCDA/OXIRAN handelt, wurde in einem zusätzlichen Versuch, anstelle des verkappten (blockierten) Amins, die äquimolare Menge DMP eingesetzt. Diese Zusammensetzung war nach dessen Aufbringen auf ein Blech so reaktiv, dass es an der Metalloberfläche in kürzester Zeit zu einer fast vollständigen Quervernetzung der reaktiven Gruppen der Zusammensetzung gekommen ist. Durch diese rasche Quervernetzung erhielt die aufgetragene Zusammensetzung duroplastische Eigenschaften und konnte thermisch nicht mehr verklebt werden.

Um die erfindungsgemäße Notwendigkeit der geforderten NCO-Spezifikation zu erhärten, wurde der einfachste Prototyp eines geblockten Isocyanates, nämlich Harnstoff, anstelle der HMDI-Verbindung eingesetzt. Diese Vergleichszusammensetzung verfestigte sich innerhalb von 14 Stunden bei Raumtemperatur und war einer weiteren Verarbeitung nicht mehr zugänglich und somit nicht lagerfähig.

In weiteren Vergleichsversuchen zeigte sich, dass auch gängige Vernetzungsmittel, als Substitute für DCDA, wie Hexamethylentetramin oder Hexamethylolmelamin, zu signifikant verkürzten Standzeiten der Ansätze führten und nach wenigen Stunden aushärteten.

### Beispiel 2: Zusammensetzung II Vergleich auf Lösungsmittelbasis

Zusammensetzung II unterschied sich von Zusammensetzung I (siehe Beispiel 1) darin, dass das lineare Epoxidharz als 75%ige Lösung in Methylethylketon (MEK) und das nichtlineare Epoxidharz als Flüssigharz beigefügt wird. Zudem wird das geblockte Hexamethylendiisocyanat als 50%ige Lösung in MEK/MP (Methoxypropanol) (1:1) zugegeben. Der Gesamtfestkörpergehalt wird mit MP auf 40% eingestellt.

Die Zusammensetzung wurde nach Vermischen für 15 min auf 60°C erwärmt und anschließend auf Raumtemperatur gekühlt. Die Viskosität der Dispersion betrug 60 s (Auslaufzeit nach DIN EN ISO 2431:2011).

Parameter und Relationen waren analog zu Beispiel 1.

Bei der Lagerung der Zusammensetzung bei Raumtemperatur wurde nach 10 Wochen eine beginnende Gelierung festgestellt.

Lagerfähigkeit: 10 Wochen, dann beginnende Gelierung.

Allerdings zeigte sich, dass Zusammensetzung II, auf Lösemittelbasis nach dem Auftragen auf ein Blech ebenfalls bei 195°C in 20 Sekunden vorvernetzt werden kann. Zwei Bleche, von denen eines mit Zusammensetzung II beschichtet wurde, konnten bei 215°C in 12 Sekunden miteinander verklebt werden.

### Beispiel 3: Zusammensetzung III auf Wasserbasis

Zusammensetzung III umfasste analog zu Zusammensetzung I 1 Mol des linearen Epoxidharzes. Zusätzlich enthielt Zusammensetzung III 0,6 Mol ein Novolak-Harz auf Basis von Kresol mit einer Epoxidfunktionalität von 5,5 und einem durchschnittlichen Äquivalentgewicht von 215 g/mol vorliegend als 40%ige Dispersion in Wasser. Als Härter enthielt Zusammensetzung III 1,1 Mol Kreatinin mit einer Funktionalität von 2 und einem Äquivalentgewicht von 56,5 g/mol vorliegend als 30%ige Lösung in Methoxypropanol. Zusammensetzung III enthielt zusätzlich 1 Mol eines mit DMP geblockten trimeren HMDI mit einer Funktionalität von 3 vorliegend als 40%ige Lösung in Wasser.

Zusammensetzung III wurde nach Vermischen für 15 min auf 60°C erwärmt und anschließend auf Raumtemperatur gekühlt. Die Viskosität der Dispersion betrug 60 bis 80 s (Auslaufzeit nach DIN EN ISO 2431:2011).

Zusammensetzung III zeigte die folgenden erfindungsgemäßen Parameter:

| | | |
|---|---|---|
| ∑ | Equivalente -OH: | 6 |
| ∑ | Equivalente -NH: | 5 |
| ∑ | Equivalente -NCO: | 3 |
| ∑ | Equivalente Oxiran: | 5,3 |
| ∑ | OH + NH: | 11 |
| ∑ | NCO + Oxiran: | 8,3 |

Zusammensetzung III wies einen mittlere Epoxidfunktionalität der Funktionalitäten des linearen und des nichtlinearen Epoxidharzes von 2,97 auf. Das Verhältnis von NCO- zu OH-Gruppen betrug 0,5, das Verhältnis von Oxiran- zu NH-Gruppen 1,06 und das Verhältnis von NCO- und Oxiran-Gruppen zu OH- und NH-Gruppen 0,75.

Es zeigte sich, dass Zusammensetzung III nach dem Auftragen auf ein Blech bei 180°C bis 195°C in 20 bis 30 Sekunden getrocknet werden kann. Zwei Bleche, von denen eines mit Zusammensetzung III beschichtet wurde, konnten bei 230°C in 25 Sekunden miteinander verklebt werden.

Zusammensetzung III zeigte nach einem Monat Lagerung bei Raumtemperatur eine leichte Viskositätserhöhung und nach weiteren zwei Monaten begann die Zusammensetzung zu gelieren. Die resultierenden Thixotropieeigenschaften blieben jedoch weiterte drei Monate noch akzeptabel.

## Patentansprüche

1. Zusammensetzung, vorzugsweise zur Verklebung von Metallblechen, umfassend:
a. 1 Molteil mindestens eines linearen Epoxidharzes mit einem mittleren Epoxid-Äquivalentgewicht von 600 bis 5.000 g/mol und einer Epoxidfunktionalität von 2,
b. 0,4 bis 0,8 Molteile mindestens eines nicht-linearen Epoxidharzes mit einem mittleren Epoxid-Äquivalentgewicht von 180 bis 350 g/mol und einer mittleren Epoxidfunktionalität von mindestens 3,
c. 0,8 bis 1,3 Molteile mindestens eines basischen Härters umfassend mindestens zwei freie amingebundene Wasserstoffatome, und
d. 0,9 bis 1,2 Molteile mindestens eines Vernetzers umfassend mindestens zwei blockierte Isocyanatgruppen.

2. Zusammensetzung gemäß Anspruch 1, **dadurch gekennzeichnet, dass** die Zusammensetzung Wasser und/oder ein organisches Lösungsmittel umfasst und als Lösung, Emulsion oder Dispersion vorliegt.

3. Zusammensetzung gemäß Anspruch 1 oder 2, **dadurch gekennzeichnet, dass** das mindestens eine lineare Epoxidharz ein mittleres Epoxid-Äquivalentgewicht von 1.500 bis 2.500 g/mol aufweist.

4. Zusammensetzung gemäß einem der Ansprüche 1 bis 3, **dadurch gekennzeichnet, dass** das mindestens eine lineare Epoxidharz ein Bisphenol Epoxidharz, vorzugsweise ein Bisphenol-A-Epoxidharz, ein Bisphenol-F-Epoxidharz, ein Bisphenol-S-Epoxidharz oder ein Bisphenol-Z-Epoxidharz, ist, wobei das mindestens eine lineare Epoxidharz vorzugsweise mindestens drei Bisphenol Einheiten pro Molekül umfasst.

5. Zusammensetzung gemäß einem der Ansprüche 1 bis 4, **dadurch gekennzeichnet, dass** das mindestens eine lineare Epoxidharz ein Bisphenol-A-Epoxidharz mit 3 bis 15, vorzugsweise 4, 7 oder 9, Bisphenol A Einheiten pro Molekül, ist.

6. Zusammensetzung gemäß einem der Ansprüche 1 bis 5, **dadurch gekennzeichnet, dass** das mindestens eine lineare Epoxidharz, vorzugsweise ein Bisphenol-A-Epoxidharz, zwei bis 14, vorzugsweise drei, sechs oder acht sekundäre Hydroxylgruppen pro Molekül umfasst.

7. Zusammensetzung gemäß einem der Ansprüche 1 bis 6, **dadurch gekennzeichnet, dass** das mindestens eine nicht-lineare Epoxidharz ein mittleres Epoxid-Äquivalentgewicht von 190 bis 280 g/mol aufweist.

8. Zusammensetzung gemäß einem der Ansprüche 1 bis 7, **dadurch gekennzeichnet, dass** das mindestens eine nicht-lineare Epoxidharz mindestens ein Novolak-Epoxidharz ist, wobei das mindestens eine Novolak-Epoxidharz vorzugsweise Phenol- und/oder Kresol-Einheiten umfasst, wobei das mindestens eine Novolak-Epoxidharz drei bis acht, vorzugsweise drei bis sechs, Epoxidgruppen pro Molekül des Epoxidharzes umfasst.

9. Zusammensetzung gemäß einem der Ansprüche 1 bis 8, **dadurch gekennzeichnet, dass** das mindestens eine lineare Epoxidharz und das mindestens eine nicht-lineare Epoxidharz gemeinsam im Mittel 2,3 bis 5,0, vorzugsweise 2,4 bis 3,5, Epoxidgruppen pro Molekül des Epoxidharzes umfasst.

10. Zusammensetzung gemäß einem der Ansprüche 1 bis 9, **dadurch gekennzeichnet, dass** der mindestens eine basische Härter umfassend mindestens zwei freie amingebundene Wasserstoffatome, ein Guanidinderivat, vorzugsweise ausgewählt aus der Gruppe bestehend aus Dicyandiamid, Dicyandiamidin, Aminoguanidin, Kreatin, Kreatinin, Arginin, aliphatisches Biguanid, aromatisches Biguanid, 2-Aminopyridimin, 3-Amino-1,2,4-Triazol, 5-Amino-1H-Tetrazol, 1,3-Di-o-tolylguanidin und 2-Cyanimino-1H,5-alkyl-1,3,5-Triazin ist.

11. Zusammensetzung gemäß einem der Ansprüche 1 bis 10, **dadurch gekennzeichnet, dass** der mindestens eine Vernetzer ein aliphatisches oder cycloaliphatisches Diisocyanat oder Triisocyanat ist, wobei die Isocyanat-Gruppen des aliphatischen oder cycloaliphatischen Diisocyanats oder Triisocyanats durch einen C₄- bis C₁₀-Alkyl-Rest getrennt sind, vorzugsweise ausgewählt aus der Gruppe bestehend aus Hexamethylen-Diisocyanat, 2-Methyl-hexamethylen-Diisocyanat, 2,2,4(2,4,4)-Trimethyl-hexamethylen-Diisocyanat (TMDI), 1,12-Dodecan-Diisocyanat, omega,omega-Diisocyanatodipropylether, 1,4-Cyclohexandiisocyanat, 1,4-Diisocyanatomethylcyclohexan, Isophorondiisocyanat, und/oder deren Isocyanurat-Trimeren.

12. Zusammensetzung gemäß einem der Ansprüche 1 bis 11, **dadurch gekennzeichnet, dass** die Isocyanatgruppen mit einem Amin, vorzugsweise mit einem heterocyclischen Amin umfassend mindestens zwei Stickstoffheteroatome, blockiert sind, wobei das Amin vorzugsweise ein Pyrazol, vorzugsweise 3,4-Dimethylpyrazol oder 3,5-Dimethylpyrazol, ein Imidazol, ein Benzimidazol, ein 1,2,3-Triazol, vorzugsweise ein Benztriazol, ein 1,2,4-Triazol, ein Triazabicyclodecen oder ein N-monosubstituiertes Piperazin ist.

13. Zusammensetzung gemäß einem der Ansprüche 2 bis 12, **dadurch gekennzeichnet, dass** das mindestens eine organische Lösungsmittel ein mit Wasser mischbares Lösungsmittel ist und ausgewählt ist aus der Gruppe bestehend aus einem C₃-C₆-Keton, einem C₂-C₄-Alkohol, einem Monoalkyl-(C₂-C₄)-Ether von C₁-C₄-Glykolen, einem Di- und/oder Triethylen- und/oder -propylenGlykol, Dioxan, Tetrahydrofuran und C₄ bis Cs-Lacton.

14. Beschichtetes Metall herstellbar durch Aufbringen einer Zusammensetzung gemäß einem der Ansprüche 1 bis 13 auf einen festen Körper, vorzugsweise auf ein Blech.

15. Verfahren zur Beschichtung und optionalen Verklebung von Blechen umfassend die Schritte
- Aufbringen einer Zusammensetzung gemäß einem der Ansprüche 1 bis 13 auf die Oberfläche eines Blechs,
- Trocknen und Vorvernetzen der Zusammensetzung auf der Oberfläche des Blechs bei einer Temperatur von 150 bis 200°C, vorzugsweise von 170 bis 190°C, während einer Dauer von 10 Sekunden bis 2 Minuten, vorzugsweise von 20 bis 30 Sekunden,
- optionales Ausstanzen von Blechstücken aus dem Blech,
- optionales Stapeln der ausgestanzten Blechteile und
- optionales Verkleben und Härten der ausgestanzten Blechteile bei einer Temperatur von 220 bis 260°C, während einer Dauer von 5 Sekunden bis 2 Minuten, vorzugsweise von 10 bis 30 Sekunden.

16. Blechpaket oder Bauteil umfassend ein Blechpaket, insbesondere ein Bauteil für Elektromaschinen und/oder Transformatoren, wobei das Blechpaket mindestens zwei mit einer Zusammensetzung gemäß einem der Ansprüche 1 bis 13 miteinander verklebte Bleche umfasst.

17. Blechpaket oder Bauteil umfassend ein Blechpaket, insbesondere ein Bauteil für Elektromaschinen und/oder Transformatoren erhältlich mit einem Verfahren gemäß Anspruch 15.

## Claims

1. Composition, preferably for bonding metal sheets, comprising:
a. 1 molar part of at least one linear epoxy resin with an average epoxy equivalent weight of 600 to 5,000 g/mol and an epoxy functionality of 2,
b. 0.4 to 0.8 molar parts of at least one non-linear epoxy resin with an average epoxy equivalent weight of 180 to 350 g/mol and an average epoxy functionality of at least 3,
c. 0.8 to 1.3 molar parts of at least one basic hardener comprising at least two free amine-bonded hydrogen atoms, and
d. 0.9 to 1.2 molar parts of at least one crosslinker comprising at least two blocked isocyanate groups.

2. Composition according to claim 1, **characterized in that** the composition comprises water and/or an organic solvent and is present as a solution, emulsion or dispersion.

3. Composition according to claim 1 or 2, **characterized in that** the at least one linear epoxy resin has an average epoxy equivalent weight of 1,500 to 2,500 g/mol.

4. Composition according to any one of claims 1 to 3, **characterized in that** the at least one linear epoxy resin is a bisphenol epoxy resin, preferably a bisphenol A epoxy resin, a bisphenol F epoxy resin, a bisphenol S epoxy resin or a bisphenol Z epoxy resin, wherein the at least one linear epoxy resin preferably comprises at least three bisphenol units per molecule.

5. Composition according to any one of claims 1 to 4, **characterized in that** the at least one linear epoxy resin is a bisphenol A epoxy resin having 3 to 15, preferably 4, 7 or 9, bisphenol A units per molecule.

6. Composition according to any one of claims 1 to 5, **characterized in that** the at least one linear epoxy resin, preferably a bisphenol A epoxy resin, comprises two to 14, preferably three, six or eight secondary hydroxyl groups per molecule.

7. Composition according to any one of claims 1 to 6, **characterized in that** the at least one non-linear epoxy resin has an average epoxy equivalent weight of 190 to 280 g/mol.

8. Composition according to any one of claims 1 to 7, **characterized in that** the at least one non-linear epoxy resin is at least one novolak epoxy resin, wherein the at least one novolak epoxy resin preferably comprises phenol and/or cresol units, wherein the at least one novolak epoxy resin comprises three to eight, preferably three to six, epoxy groups per molecule of the epoxy resin.

9. Composition according to any one of claims 1 to 8, **characterized in that** the at least one linear epoxy resin and the at least one non-linear epoxy resin together comprise on average 2.3 to 5.0, preferably 2.4 to 3.5, epoxy groups per molecule of the epoxy resin.

10. Composition according to any one of claims 1 to 9, **characterized in that** the at least one basic hardener comprising at least two free amine-bonded hydrogen atoms, a guanidine derivative, preferably selected from the group consisting of dicyandiamide, dicyandiamidine, aminoguanidine, creatine, creatinine, arginine, aliphatic biguanide, aromatic biguanide, 2-aminopyridimine, 3-amino-1,2,4-triazole, 5-amino-1H-tetrazole, 1,3-di-o-tolylguanidine and 2-cyanimino-1H,5-alkyl-1,3,5-triazine.

11. Composition according to any one of claims 1 to 10, **characterized in that** the at least one crosslinker is an aliphatic or cycloaliphatic diisocyanate or triisocyanate, wherein the isocyanate groups of the aliphatic or cycloaliphatic diisocyanate or triisocyanate are separated by a C₄ - to C₁₀ -alkyl radical, preferably selected from the group consisting of hexamethylene diisocyanate, 2-methylhexamethylene diisocyanate, 2,2,4(2,4,4)-trimethylhexamethylene diisocyanate (TMDI), 1,12-dodecane diisocyanate, omega,omega-diisocyanatodipropyl ether, 1,4-cyclohexanediisocyanate, 1,4-diisocyanatomethylcyclohexane, isophorone diisocyanate, and/or their isocyanurate trimers.

12. Composition according to any one of claims 1 to 11, **characterized in that** the isocyanate groups are blocked with an amine, preferably with a heterocyclic amine comprising at least two nitrogen heteroatoms, wherein the amine is preferably a pyrazole, preferably 3,4-dimethylpyrazole or 3,5-dimethylpyrazole, an imidazole, a benzimidazole, a 1,2,3-triazole, preferably a benzotriazole, a 1,2,4-triazole, a triazabicyclodecene or an N-monosubstituted piperazine.

13. Composition according to any one of claims 2 to 12, **characterized in that** the at least one organic solvent is a water-miscible solvent and is selected from the group consisting of a C₃ -C₆ -ketone, a C₂ -C₄ -alcohol, a monoalkyl (C₂ -C₄ ) ether of C₁ -C₄ -glycols, a di- and/or triethylene and/or propylene glycol, dioxane, tetrahydrofuran and C₄ to C₈ -lactone.

14. Coated metal producible by applying a composition according to any one of claims 1 to 13 to a solid body, preferably to a metal sheet.

15. Process for coating and optionally bonding metal sheets comprising the steps of
- Application of a composition according to any one of claims 1 to 13 to the surface of a metal sheet,
- Drying and pre-crosslinking of the composition on the surface of the sheet at a temperature of 150 to 200°C, preferably 170 to 190°C, for a period of 10 seconds to 2 minutes, preferably 20 to 30 seconds,
- optional punching of sheet metal pieces from the sheet,
- optional stacking of the punched sheet metal parts and
- optional bonding and hardening of the punched sheet metal parts at a temperature of 220 to 260°C for a period of 5 seconds to 2 minutes, preferably 10 to 30 seconds.

16. Laminated core or component comprising a laminated core, in particular a component for electrical machines and/or transformers, wherein the laminated core comprises at least two sheets bonded together with a composition according to one of claims 1 to 13.

17. Laminated core or component comprising a laminated core, in particular a component for electrical machines and/or transformers obtainable by a method according to claim 15.

## Revendications

1. Composition, de préférence pour le collage de tôles métalliques, comprenant :
a. 1 partie en moles d'au moins une résine époxy linéaire avec un poids équivalent d'époxy moyen de 600 à 5.000 g/mol et une fonctionnalité époxydique de 2,
b. 0,4 à 0,8 partie en moles d'au moins une résine époxy non linéaire avec un poids équivalent d'époxy moyen de 180 à 350 g/mol et une fonctionnalité époxydique moyenne d'au moins 3,
c. 0,8 à 1,3 partie en moles d'au moins un agent durcissant basique comprenant au moins deux atomes d'hydrogène libres liés à une amine et
d. 0,9 à 1,2 partie en moles d'au moins un agent réticulant comprenant au moins deux groupes isocyanates bloqués.

2. Composition selon la revendication 1, **caractérisée en ce que** cette composition comprend de l'eau et/ou un solvant organique et qu'une émulsion ou une dispersion est présente sous forme de solution.

3. Composition selon la revendication 1 ou 2, **caractérisée en ce que** l'au moins une résine époxy linéaire présente un poids équivalent d'époxy moyen de 1.500 à 2.500 g/mol.

4. Composition selon une des revendications 1 à 3, **caractérisée en ce que** l'au moins une résine époxy linéaire est une résine époxy de bisphénol, de préférence une résine époxy de bisphénol A, une résine époxy de bisphénol F, une résine époxy de bisphénol S ou une résine époxy de bisphénol Z, l'au moins une résine époxy linéaire comprenant de préférence au moins trois unités de bisphénol par molécule.

5. Composition selon une des revendications 1 à 4, **caractérisée en ce que** l'au moins une résine époxy linéaire est une résine époxy de bisphénol A avec de 3 à 15,
de préférence 4, 7 ou 9 unités de bisphénol A par molécule.

6. Composition selon une des revendications 1 à 5, **caractérisée en ce que** l'au moins une résine époxy linéaire, de préférence une résine époxy de bisphénol A, comprend de deux à 14, de préférence, trois, six ou huit groupe hydroxyles secondaires par molécule.

7. Composition selon une des revendications 1 à 6, **caractérisée en ce que** l'au moins une résine époxy non linéaire présente un poids équivalent d'époxy moyen de 190 à 280 g/mol.

8. Composition selon une des revendications 1 à 7, **caractérisée en ce que** l'au moins une résine époxy non linéaire est une résine époxy de novolaque, cette au moins une résine époxy de novolaque comportant de préférence des unités de phénol et/ou de crésol, cette au moins une résine époxy de novolaque comportant de trois à huit, de préférence de trois à six, groupes époxy par molécule de résine époxy.

9. Composition selon une des revendications 1 à 8, **caractérisée en ce que** l'au moins une résine époxy linéaire et l'au moins une résine époxy non linéaire comporte ensemble en moyenne de 2,3 à 5,0, de préférence de 2,4 à 3,5, groupes époxy par molécule de résine époxy.

10. Composition selon une des revendications 1 à 9, **caractérisée en ce que** l'au moins un agent durcissant basique comprenant au moins deux atomes d'hydrogène libres liés à une amine est un dérivé de la guanidine, de préférence sélectionné parmi le groupe constitué par le dicyandiamide, la dicyandiamidine, l'aminoguanidine, la créatine, la créatinine, l'arginine, le biguanide aliphatique, le biguanide aromatique, la 2-aminopyridimine, le 3-amino-1,2,4-triazol, le 5-amino-1H-tétrazol, la 1,3-di-o-tolylguanidine et la 2-cyanimino-1H,5-alkyl-1,3,5-triazine.

11. Composition selon une des revendications 1 à 10, **caractérisée en ce que** l'au moins un agent réticulant est un diisocyanate ou un triisocyanate aliphatique ou cycloaliphatique, les groupes isocyanates du diisocyanate ou du triisocyanate aliphatique ou cycloaliphatique étant séparés par un radical alkyle en C₄-C₁₀, sélectionné de préférence parmi le groupe constitué du diisocyanate d'hexaméthylène, du diisocyante de 2-méthyl-hexaméthylène, du diisocyanate de 2,2,4 (2, 4,4)-triméthyl-hexaméthylène (TMDI), du de 1,12-dodécane diisocyanate, de l'oméga, de l'oméga-diisocyanatodipropyléther, du 1,4-cyclohexane diisocianate, du 1,4-diisocyanatométhylcyclohexane, du diisocyanate d'isophorone et/ou de leurs trimères d'isocyanurate.

12. Composition selon une des revendications 1 à 11, **caractérisée en ce que** les groupes isocyanate avec une amine, de préférence avec une amine hétérocyclique comprenant au moins deux hétéroatomes d'azote, sont bloqués, l'amine étant de préférence un pyrazole, de préférence du 3,4-diméthylpirazole ou du 3,5-diméthylpyrazole, un imidazole, un benzimidazole, un 1,2,3-triazole, de préférence un benzotriazole, un 1,2,4-triazole, un triazabicyclodécène ou une pipérazine N-monosubstituée.

13. Composition selon une des revendications 2 à 12, **caractérisée en ce que** l'au moins un solvant organique est un solvant miscible avec l'eau et est sélectionné parmi le groupe constitué d'une cétone en C₃-C₆, d'un alcool en C₂-C₄, d'un éther de mono-alkyle (C₂-C₄) de glycolène en C₁-C₄, d'un di- et/ou triéthylène et/ou propylèneglycol, du dioxane, du tétrahydrofurane et/ou d'une lactone en C₄ à C₈.

14. Métal revêtu pouvant être fabriqué par application d'une composition selon une des revendications 1 à 13 sur un corps solide, de préférence sur une tôle.

15. Procédé pour le revêtement et le collage facultatif de tôles comprenant les étapes suivantes :
- application d'une composition selon une des revendications 1 à 13 sur la surface d'une tôle,
- séchage et préréticulation de la composition sur la surface de la tôle à une température de 150 à 200 °C, de préférence de 170 à 190 °C, pendant une durée de 10 secondes à 2 minutes, de préférence de 20 à 30 secondes,
- découpage facultatif de morceaux de la tôle,
- empilage facultatif des pièces de tôle découpées et
- collage facultatif et trempage des pièces de tôle découpées à une température de 220 à 260 °C, pendant une durée de 5 secondes à 2 minutes, de préférence de 10 à 20 secondes.

16. Paquet de tôles ou composant comprenant un paquet de tôles, en particulier composant pour des machines électriques et/ou des transformateurs, le paquet de tôles comprenant au moins deux tôles collées avec une composition selon une des revendications 1 à 13.

17. Paquet de tôles ou composant comprenant un paquet de tôles, en particulier composant pour des machines électriques et/ou des transformateurs, pouvant être obtenu avec un procédé selon la revendication 15.
